# EUROPÄISCHE PATENTANMELDUNG

(11) **EP 1 577 825 A2**
(43) Veröffentlichungstag der Anmeldung: **21.09.2005**
(21) Anmeldenummer: 05004591.3
(22) Anmeldetag: 02.03.2005
(51) Int. Cl.: G06K 7/00

(54) **Identifikationssystem und Verfahren zum Betrieb desselben**

(30) Priorität: 15.03.2004 DE 102004012514
(71) Anmelder: HEWI HEINRICH WILKE GMBH, 34454 Arolsen (DE)
(72) Erfinder: Kress, Robert, 34308 Bad Emstal (DE); Domes, Alexander, 34369 Hofgeismar (DE)
(74) Vertreter: Manitz, Finsterwald & Partner GbR

(57) **Zusammenfassung**

Die Erfindung betrifft ein Verfahren zum Betrieb eines Identifikationssystems mit einem stationären Modul, welches eine Kontrolleinheit und eine mit dieser zusammenwirkende Sende- und Empfangseinheit umfasst und mit einem vom stationären Modul räumlich entfernten mobilen Transpondermodul, wobei
- die Sende- und Empfangseinheit ein elektromagnetisches Hilfsfeld mit einer ersten Feldstärke erzeugt, welches durch das in das Hilfsfeld eingebrachte Transpondermodul dämpfbar ist,
- bei Feststellung einer über einem vorgegebenen Dämpfungsschwellwert liegenden Dämpfung des Hilfsfeldes die Sende- und Empfangseinheit ein elektromagnetisches Hauptfeld mit einer gegenüber der ersten Feldstärke vergrößerten zweiten Feldstärke erzeugt,
- das Transpondermodul eine zeitlich variable Dämpfung des Hauptfeldes bewirkt, wobei der zeitliche Verlauf dieser Dämpfung abhängig von einer im Transpondermodul gespeicherten Codefolge ist, und
- die Kontrolleinheit ein Signal erzeugt, dessen zeitlicher Verlauf dem zeitlichen Verlauf der Dämpfung des Hauptfeldes entspricht.

Gemäß der Erfindung wird der Dämpfungsschwellwert während des Betriebs des Identifikationssystems verändert. Die Erfindung betrifft weiterhin ein Identifikationssystem zur Durchführung des genannten Verfahrens.

## Beschreibung

Die Erfindung betrifft ein Verfahren zum Betrieb eines Identifikationssystems mit einem stationären Modul, welches eine Kontrolleinheit und eine mit dieser zusammenwirkende Sende- und Empfangseinheit umfasst und mit einem vom stationären Modul räumlich entfernten mobilen Transpondermodul, wobei
- die Sende- und Empfangseinheit ein elektromagnetisches Hilfsfeld mit einer ersten Feldstärke erzeugt, welches durch das in das Hilfsfeld eingebrachte Transpondermodul dämpfbar ist,
- bei Feststellung einer über einem vorgegebenen Dämpfungsschwellwert liegenden Dämpfung des Hilfsfeldes die Sende- und Empfangseinheit ein elektromagnetisches Hauptfeld mit einer gegenüber der ersten Feldstärke vergrößerten zweiten Feldstärke erzeugt,
- das Transpondermodul eine zeitlich variable Dämpfung des Hauptfeldes bewirkt, wobei der zeitliche Verlauf dieser Dämpfung abhängig von einer im Transpondermodul gespeicherten Codefolge ist, und
- die Kontrolleinheit ein Signal erzeugt, dessen zeitlicher Verlauf dem zeitlichen Verlauf der Dämpfung des Hauptfeldes entspricht.
Weiterhin betrifft die Erfindung ein Identifikationssystem, mittels welchem das vorstehend genannte Verfahren durchführbar ist.

Identifikationssysteme der genannten Art sowie Verfahren zum Betrieb derselben sind aus dem Stand der Technik bekannt und werden beispielsweise im Rahmen elektronischer Schließsysteme eingesetzt. Die Kontrolleinheit mit der mit ihr zusammenwirkenden Sende- und Empfangseinheit wird hierbei üblicherweise im Bereich einer Tür oder eines Schlosses angeordnet, wohingegen das mobile Transpondermodul den Schlüssel zum Öffnen des Schlosses darstellt.

Im Transpondermodul ist eine Codefolge gespeichert, die im Falle der Aktivierung des Transpondermoduls durch das genannte Hauptfeld ausgelesen und mit einer in der Kontrolleinheit gespeicherten Codefolge verglichen wird. Sofern die gespeicherte Codefolge mit der ausgelesenen Codefolge des Transpondermoduls identisch ist, wird eine jeweils gewünschte Funktion ausgelöst, beispielsweise ein Schloss geöffnet.

Für den Betrieb des vorstehend beschriebenen Identifikationssystems ist es nötig, die Kontrolleinheit mit Energie zu versorgen, während das Transpondermodul ohne eigene Energiequelle auskommt. Für eine einwandfreie Funktion des Identifikationssystems ist es von entscheidender Bedeutung, dass sich die Kontrolleinheit sowie die Sende- und Empfangseinheit ständig in Bereitschaftsstellung befinden, um dazu in der Lage zu sein, die Annäherung eines Transpondermoduls bemerken zu können. Nach Feststellung der Anwesenheit eines solchen Transpondermoduls kann dann untersucht werden, ob es sich um ein Transpondermodul mit einer Codefolge handelt, die der in der Kontrolleinheit gespeicherten Codefolge entspricht.

Für die Aufrechterhaltung der genannten Bereitschaftsstellung ist es erforderlich, ständig ein elektromagnetisches Feld auszusenden, dessen Dämpfung durch ein Transpondermodul detektierbar ist. Das Aussenden dieses elektromagnetischen Felds führt zu einem nachteiligen Energieverbrauch, welcher besonders störend ist, wenn die Kontrolleinheit sowie die Sende- und Empfangeinheit mittels einer Batterie und eines Akkumulators betrieben werden.

Eine Lösung des geschilderten Problems ist in der europäischen Patentanmeldung EP 1 148 437 A2 beschrieben. Konkret werden hier ein Hauptsender zur Erzeugung eines Hauptfeldes und ein Hilfssender zur Erzeugung eines Hilfsfeldes vorgesehen, wobei die Energie des Hilfsfeldes deutlich unter der Energie des Hauptfeldes liegt. In der Bereitschaftsstellung des Identifikationssystems wird lediglich das einen geringen Energieverbrauch bewirkende Hilfsfeld ausgesandt. Nur wenn eine Dämpfung dieses Hilfsfeldes - z.B. durch ein Transpondermodul - bemerkt wird, erfolgt die Aussendung des Hauptfeldes, welches stark genug ist, den Code aus dem Transpondermodul auszulesen. Somit besteht ein hoher Energiebedarf lediglich während des nur eine kurze Zeitspanne benötigenden Auslesens des Codes aus dem Transpondermodul, wohingegen ansonsten ausschließlich mit dem Hilfsfeld gearbeitet werden kann, welches nur einen geringen Energieverbrauch bewirkt.

Problematisch bei dem bekannten Verfahren ist die Tatsache, dass eine Annäherung eines Transpondermoduls grundsätzlich immer dann erkannt wird, wenn die Dämpfung des Hilfsfeldes über einem fest vorgegebenen Dämpfungsschwellwert liegt. Dies führt in nachteiliger Weise dazu, dass der Dämpfungsschwellwert auch dann überschritten wird, wenn beliebige, das Hilfsfeld dämpfende Gegenstände in dieses eingebracht werden, was dann - wenn es sich bei dem Gegenstand nicht um ein Transpondermodul handelt - zu einer unerwünschten, energieaufwändigen Erzeugung des Hauptfeldes führt. Im Extremfell, wenn beispielsweise eine metallische Tür in das Hilfsfeld eingebracht wird und dort verbleibt, ist permanent ein Überschreiten des Dämpfungsschwellwerts gegeben, was dann zu einer permanenten Erzeugung des Hauptfeldes und dementsprechend zu einem sehr hohen Energieverbrauch führt.

Eine Aufgabe der Erfindung besteht darin, ein Verfahren sowie eine Vorrichtung der eingangs genannten Art derart weiter zu entwickeln, dass das Hauptfeld im Wesentlichen tatsächlich nur noch nach dem Einbringen eines Transpondermoduls in das Hilfsfeld erzeugt wird.

Erfindungsgemäß wird diese Aufgabe sowohl durch ein erfindungsgemäßes Verfahren als auch durch eine erfindungsgemäße Vorrichtung dadurch gelöst, dass der Dämpfungsschwellwert während des Betriebs des Identifikationssystems veränderbar ist bzw. verändert wird. Durch eine solche Veränderung des Dämpfungsschwellwerts kann dieser jeweils an veränderte Umgebungsbedingungen des Hilfsfeldes angepasst werden. Wenn beispielsweise eine metallische Tür in das Hilfsfeld bewegt wird, kann der Dämpfungsschwellwert derart verstellt werden, dass die durch die Tür bedingte Dämpfung des Hilfsfeldes als normale Dämpfung erkannt wird, bei der sich kein Transpondermodul im Hilfsfeld befindet. Wenn dann in diesem Zustand ein Transpondermodul in das Hilfsfeld eingeführt wird, bewirkt dieses zusätzlich zu der durch die Tür bewirkten Dämpfung eine weitere Dämpfung des Hilfsfeldes, so dass die letztlich resultierende Dämpfung nicht mehr dem an das Vorhandensein der Tür angepassten Dämpfungsschwellwert entspricht, was dann zu der gewünschten Erzeugung des Hauptfeldes führt.

Gemäß der Erfindung wird es also möglich, das Identifikationssystem dynamisch und automatisch an Änderungen der Umgebungsbedingungen anzupassen, wobei ein Umschalten vom Hilfsfeld auf das Hauptfeld nur noch beim Einbringen eines Transpondermoduls in das Hilfsfeld erfolgt.

Besonders vorteilhaft ist es, wenn der aktuelle Dämpfungsschwellwert jeweils in Abhängigkeit von n bereits durchgeführten und insbesondere von den zuletzt durchgeführten n Messungen der Dämpfung des Hilfsfeldes ermittelt wird. Die Anzahl n ist dabei bevorzugt größer als 10 und kleiner als 30, insbesondere nimmt sie einen Wert von ungefähr 20 an. Diese n Messungen repräsentieren jeweils die aktuellen Umgebungsbedingungen des Identifikationssystems, so dass der Dämpfungsschwellwert immer aktuell an diese Bedingungen angepasst ist.

Die Messung der Dämpfung des Hilfsfeldes kann in regelmäßigen Zeitabständen Δt erfolgen, wobei die Zeitspanne Δt bevorzugt kleiner als 1 Sekunde ist. Besonders bevorzugt liegt die Zeitspanne Δt zwischen 0,1 Sekunden und 0,5 Sekunden.

Eine besonders zuverlässige Funktion des erfindungsgemäßen Identifikationssystems ist dann gegeben, wenn das Produkt aus der Anzahl n der für die Ermittlung des Dämpfungsschwellwerts herangezogenen Messungen und den Zeitabständen Δt zwischen diesen Messungen gilt, dass es größer als 0,5 Sekunden und bevorzugt größer als 3 Sekunden ist. Auf diese Weise lässt sich sicherstellen, dass das erfindungsgemäße Identifikationssystem flexibel und schnell auf Änderungen, insbesondere auch auf kurzfristig aufeinander folgende Änderungen der das Hilfsfeld beeinflussenden Umgebungsbedingungen reagieren kann.

Der aktuelle Dämpfungsschwellwert kann jeweils dem Durchschnittswert der genannten n Messungen der Dämpfung des Hilfsfeldes entsprechen, wobei die Erzeugung des elektromagnetischen Hauptfeldes immer dann ausgelöst wird, wenn die ermittelte Dämpfung des Hilfsfeldes außerhalb eines den aktuellen Dämpfungsschwellwert umgebenden Toleranzbereichs liegt. Durch diese, hinsichtlich des erforderlichen Rechenaufwands sehr einfache Methode lässt sich ohne großen Aufwand ein jeweils aktueller Dämpfungsschwellwert berechnen. Schwankungen der ermittelten Dämpfung innerhalb des genannten Toleranzbereichs führen dabei noch nicht zu einer Erzeugung des Hauptfeldes. Lediglich wenn der Toleranzbereich verlassen wird, erfolgt die Erzeugung des Hauptfeldes.

Besonders vorteilhaft ist es, wenn Abweichungen der aktuellen ermittelten Dämpfung des Hilfsfeldes vom aktuellen Dämpfungsschwellwert, welche eine vorgegebene Grenzabweichung überschreiten, keine Erzeugung des elektromagnetischen Hauptfeldes auslösen. Bei dieser Ausführungsvariante der Erfindung macht man sich die Erkenntnis zunutze, dass das Eindringen eines Transpondermoduls in das Hilfsfeld lediglich eine relativ geringe Dämpfung bewirkt, das Eindringen anderer, insbesondere metallischer Gegenstände, wie z.B. Geldmünzen oder Metalltüren, eine vergleichsweise starke Dämpfung des Hilfsfeldes auslösen. Gemäß der vorstehend erwähnten bevorzugten Ausführungsvariante der Erfindung führen derartige, starke Dämpfungen im Gegensatz zu der durch ein Transpondermodul bewirkten schwachen Dämpfung nicht zu einer Erzeugung des Hauptfeldes. Es wird also jeweils die Stärke der festgestellten Dämpfung ermittelt und anschließend beurteilt, ob es sich um eine Dämpfung handelt, die von einem Transpondermodul stammen kann. Nur wenn dies der Fall ist, wird die Erzeugung eines Hauptfeldes ausgelöst.

Um diese Funktion zu erreichen, kann die Grenzabweichung größer gewählt werden als die Abweichung der aktuell ermittelten Dämpfung des Hilfsfeldes vom aktuellen Dämpfungsschwellwert beim Einbringen eines Transpondermoduls in das Hilfsfeld. Konkret kann die Grenzabweichung ein Vielfaches der Abweichung der aktuell ermittelten Dämpfung des Hilfsfeldes vom aktuellen Dämpfungsschwellwert beim Einbringen des Transpondermoduls in das Hilfsfeld betragen. Bei Verwendung eines Verfahrens, welches eine der vorstehend erläuterten Grenzabweichungen berücksichtigt, ist es besonders vorteilhaft, wenn beim Auftreten einer über der Grenzabweichung liegenden Abweichung der Dämpfung diese Abweichung nicht für die Ermittlung künftiger Dämpfungsschwellwerte herangezogen wird. Wenn also beispielsweise lediglich ein oder zwei Dämpfungswerte stark vom Dämpfungsschwellwert abweichen, bewirken in diesem Fall diese starken Abweichungen keine unerwünschte Beeinflussung des künftig verwendeten Dämpfungsschwellwerts.

Weiterhin bevorzugt ist es, wenn beim Auftreten einer über der Grenzabweichung liegenden Abweichung der Dämpfung der aktuelle Dämpfungsschwellwert verworfen und anhand nachfolgender Messungen neu ermittelt wird. Dem Identifikationssystem wird somit durch das Auftreten der über der Grenzabweichung liegenden Abweichung signalisiert, dass eine signifikante Änderung eingetreten ist, die eine vollkommen neue Bestimmung des Dämpfungsschwellwerts rechtfertigt. Ein solcher neuer Dämpfungsschwellwert kann gemäß einer der vorstehend beschriebenen Verfahrensvarianten ermittelt werden.

Zudem ist es vorteilhaft, wenn die ermittelten Dämpfungen der Kontrolleinheit über einen A/D-Wandler zugeführt werden, dessen Aussteuerung in Abhängigkeit von den aktuell ermittelten Dämpfungen nachgeregelt wird. Auf diese Weise kann zu jedem Zeitpunkt eine möglichst optimale Aussteuerung des A/D-Wandlers und somit eine Durchführung des erfindungsgemäßen Verfahrens mit höchstmöglicher Genauigkeit sichergestellt werden.

Ein erfindungsgemäßes Identifikationssystem besteht aus mehreren Modulen bzw. Bestandteilen, die jeweils zur Durchführung der vorstehend erläuterten Verfahren geeignet sind.

Besonders bevorzugt ist es im Rahmen eines solchen Identifikationssystems, wenn eine lediglich einen Sender aufweisende Sendeeinheit sowohl zur Erzeugung des Hilfsfeldes als auch zur Erzeugung des Hauptfeldes herangezogen wird. Auf diese Weise werden separate Sendeeinheiten für Hilfsfeld und Hauptfeld vermieden, was die Wirtschaftlichkeit des Identifikationssystems erhöht. In gleicher Weise kann eine lediglich einen Empfänger aufweisende Empfangseinheit sowohl zur Ermittlung der Dämpfung des Hilfsfeldes als auch zur Ermittlung der Dämpfung des Hauptfeldes ausgelegt werden.

Weitere bevorzugte Ausführungsformen der Erfindung sind in den Unteransprüchen genannt.

Die Erfindung wird nachfolgend anhand eine Ausführungsbeispiels unter Bezugnahme auf die Figuren erläutert; in diesen zeigen:
- Fig. 1: ein Blockschaltbild eines erfindungsgemäßen Identifikationssystems und
- Fig. 2: ein eine Ausführungsvariante des erfindungsgemäßen Verfahrens veranschaulichendes Flussdiagramm.

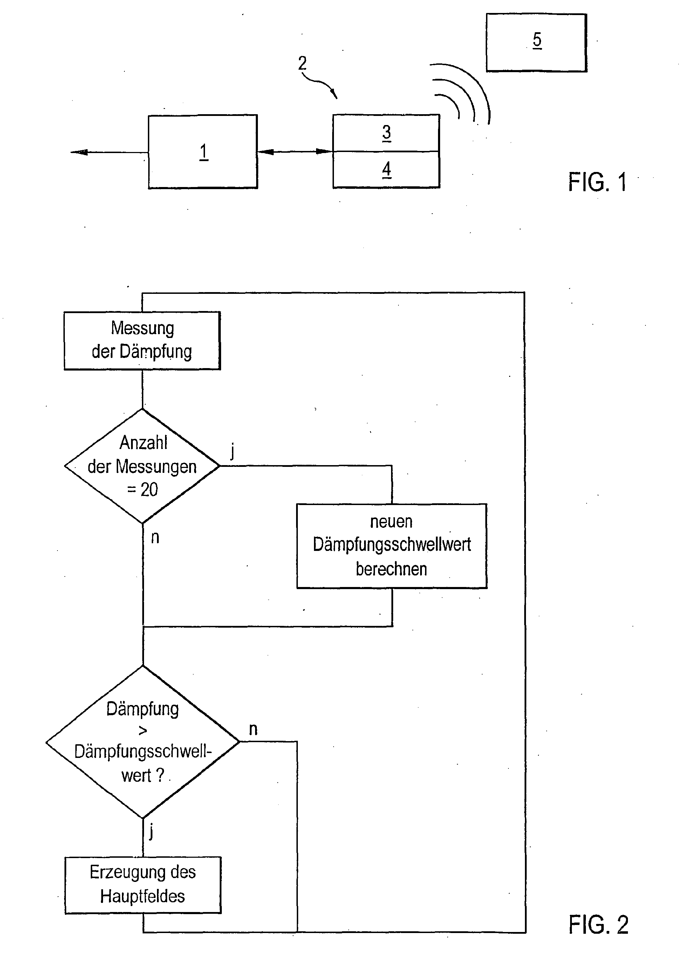

Gemäß Fig. 1 ist stationär im Bereich eines Türschlosses eine Kontrolleinheit 1 und eine mit dieser zusammenwirkende Sende- und Empfangseinheit 2 vorgesehen. Die Sende- und Empfangseinheit 2 umfasst dabei einen Sender 3 sowie einen Empfänger 4. Der Sender 3 ist zur Erzeugung sowohl des erfindungsgemäßen Hilfsfeldes als auch des erfindungsgemäßen Hauptfeldes ausgelegt. In entsprechender Weise kann der Empfänger 4 Dämpfungen des Hilfsfeldes und des Hauptfeldes erkennen und entsprechende Dämpfungswerte der Kontrolleinheit 1 zur Verfügung stellen.

Beim Betrieb des Identifikationssystems gemäß Fig. 1 erzeugt der Sender 3 ein Hilfsfeld mit einer ersten Feldstärke, welches durch ein in das Feld eingebrachtes Transpondermodul 5 dämpfbar ist. Die jeweilige Dämpfung kann mittels des Empfängers 4 ermittelt und der Kontrolleinheit 1 zur Verfügung gestellt werden. Die Kontrolleinheit 1 vergleicht die ermittelte Dämpfung mit einem in der Kontrolleinheit 1 gespeicherten Dämpfungsschwellwert. Wenn die Dämpfung unterhalb des Dämpfungsschwellwerts liegt, wird vom Sender 3 weiterhin ein Hilfsfeld ausgesandt. Liegt die Dämpfung hingegen über dem Dämpfungsschwellwert, veranlasst die Kontrolleinheit 1 den Sender 3 anstelle des Hilfsfeldes ein Hauptfeld auszusenden, welches eine gegenüber der Feldstärke des Hilfsfeldes vergrößerte Feldstärke aufweist.

Das im Hauptfeld befindliche Transpondermodul 5 bewirkt dann eine zeitlich variable Dämpfung des Hauptfeldes, wobei der zeitliche Verlauf dieser Dämpfung abhängig von einer im Transpondermodul 5 gespeicherten Codefolge ist. Dieser Dämpfungsverlauf wird vom Empfänger 4 detektiert und wiederum der Kontrolleinheit 1 zur Verfügung gestellt, in welcher eine bestimmte Codefolge gespeichert ist. In der Kontrolleinheit 1 wird diese gespeicherte Codefolge dann mit dem vom Empfänger 4 gelieferten Dämpfungsverlauf verglichen. Bei Übereinstimmung erzeugt die Kontrolleinheit 1 ein Steuersignal, welches ein Öffnen des Schlosses bewirkt.

Fig. 2 veranschaulicht eine erfindungsgemäße Variante, gemäß der der in der Kontrolleinheit 1 gemäß Fig. 1 gespeicherte Dämpfungsschwellwert berechenbar ist.

Nach jeder Messung der Dämpfung des Hilfsfeldes wird ein Zähler inkrementiert und überprüft, ob dieser Zähler den Wert 20 erreicht hat. Wenn dies der Fall ist, wird aus den letzten zwanzig Messungen der Durchschnittswert der bei den letzten zwanzig Messungen ermittelten Dämpfungen berechnet und als neuer Dämpfungsschwellwert abgespeichert. Der genannte Zähler wird dabei wieder auf Null gesetzt. Anschließend wird die im Rahmen der letzten Messung ermittelte Dämpfung mit dem gespeicherten Dämpfungsschwellwert verglichen. Falls der genannte Zähler zur Ermittlung der Anzahl der durchgeführten Messungen den Wert 20 noch nicht erreicht hat, wird auf die Berechnung eines neuen Dämpfungsschwellwerts verzichtet und direkt die im Rahmen der letzten Messung ermittelte Dämpfung mit dem gespeicherten Dämpfungsschwellwert verglichen.

Nur wenn sich bei diesem Vergleich herausstellt, dass die ermittelte Dämpfung über dem Dämpfungsschwellwert liegt, wird die Erzeugung eines Hauptfeldes ausgelöst. Anderenfalls wird die Dämpfung des Hilfsfeldes erneut gemessen, und der beschriebene Prozess beginnt wieder von neuem.

### Bezugszeichenliste

- 1: Kontrolleinheit
- 2: Sende- und Empfangseinheit
- 3: Sender
- 4: Empfänger
- 5: Transpondermodul

## Patentansprüche

1. Verfahren zum Betrieb eines Identifikationssystems mit einem stationären Modul, welches eine Kontrolleinheit (1) und eine mit dieser zusammenwirkende Sende- und Empfangseinheit (2) umfasst und mit einem vom stationären Modul (1, 2) räumlich entfernten mobilen Transpondermodul (5), wobei
- die Sende- und Empfangseinheit (2) ein elektromagnetisches Hilfsfeld mit einer ersten Feldstärke erzeugt, welches durch das in das Hilfsfeld eingebrachte Transpondermodul (5) dämpfbar ist,
- bei Feststellung einer über einem vorgegebenen Dämpfungsschwellwert liegenden Dämpfung des Hilfsfeldes die Sende- und Empfangseinheit (2) ein elektromagnetisches Hauptfeld mit einer gegenüber der ersten Feldstärke vergrößerten zweiten Feldstärke erzeugt,
- das Transpondermodul (5) eine zeitlich variable Dämpfung des Hauptfeldes bewirkt, wobei der zeitliche Verlauf dieser Dämpfung abhängig von einer im Transpondermodul (5) gespeicherten Codefolge ist, und
- die Kontrolleinheit (1) ein Signal erzeugt, dessen zeitlicher Verlauf dem zeitlichen Verlauf der Dämpfung des Hauptfeldes entspricht,
**dadurch gekennzeichnet,**
**dass** der Dämpfungsschwellwert während des Betriebs des Identifikationssystems verändert wird.

2. Verfahren nach Anspruch 1,
**dadurch gekennzeichnet, dass**
der aktuelle Dämpfungsschwellwert jeweils in Abhängigkeit von n bereits durchgeführten und insbesondere von den zuletzt durchgeführten n Messungen der Dämpfung des Hilfsfeldes ermittelt wird, wobei insbesondere gilt: 10 < n < 30.

3. Verfahren nach einem der vorhergehenden Ansprüche,
**dadurch gekennzeichnet, dass**
die Messung der Dämpfung des Hilfsfeldes in regelmäßigen Zeitabständen Δt erfolgt, für die insbesondere gilt: Δt < 1 Sekunde und für die bevorzugt gilt: 0,1 Sekunden < Δt < 0,5 Sekunden, wobei insbesondere für das Produkt aus der Anzahl n der für die Ermittlung des Dämpfungsschwellwerts herangezogenen Messungen und den Zeitabständen Δt zwischen diesen Messungen gilt: Δt * n > 0,5 Sekunden und insbesondere Δt * n > 3 Sekunden.

4. Verfahren nach einem der vorhergehenden Ansprüche,
**dadurch gekennzeichnet, dass**
der aktuelle Dämpfungsschwellwert jeweils dem Durchschnittswert der n Messungen der Dämpfung des Hilfsfeldes gemäß Anspruch 2 entspricht, wobei die Erzeugung des elektromagnetischen Hauptfeldes dann ausgelöst wird, wenn die ermittelte Dämpfung des Hilfsfeldes außerhalb eines den aktuellen Dämpfungsschwellwert umgebenden Toleranzbereichs liegt.

5. Verfahren nach einem der vorhergehenden Ansprüche,
**dadurch gekennzeichnet, dass**
Abweichungen der aktuell ermittelten Dämpfung des Hilfsfeldes vom aktuellen Dämpfungsschwellwert, welche eine vorgegebene Grenzabweichung überschreiten, keine Erzeugung des elektromagnetischen Hauptfeldes auslösen, wobei insbesondere die Grenzabweichung größer ist als die Abweichung der aktuell ermittelten Dämpfung des Hilfsfeldes vom aktuellen Dämpfungsschwellwert beim Einbringen des Transpondermoduls (5) in das Hilfsfeld, wobei wiederum insbesondere die Grenzabweichung ein Vielfaches der Abweichung der aktuell ermittelten Dämpfung des Hilfsfeldes vom aktuellen Dämpfungsschwellwert beim Einbringen des Transpondermoduls (5) in das Hilfsfeld beträgt.

6. Verfahren nach Anspruch 5,
**dadurch gekennzeichnet, dass**
beim Auftreten einer über der Grenzabweichung liegenden Abweichung diese Abweichung nicht für die Ermittlung künftiger Dämpfungsschwellwerte herangezogen wird.

7. Verfahren nach einem der Ansprüche 5 oder 6,
**dadurch gekennzeichnet, dass**
beim Auftreten einer über der Grenzabweichung liegenden Abweichung der aktuelle Dämpfungsschwellwert verworfen und anhand nachfolgender Messungen neu ermittelt wird, wobei insbesondere die Neuermittlung des Dämpfungsschwellwerts gemäß einem der Ansprüche 2 bis 4 erfolgt.

8. Verfahren nach einem der vorhergehenden Ansprüche,
**dadurch gekennzeichnet, dass**
die ermittelten Dämpfungen der Kontrolleinheit über einen A/D-Wandler zugeführt werden, dessen Aussteuerung in Abhängigkeit von den aktuell ermittelten Dämpfungen nachgeregelt wird, um jeweils eine möglichst optimale Aussteuerung sicherzustellen.

9. Identifikationssystem mit einem stationären Modul, welches eine Kontrolleinheit (1) und eine mit dieser zusammenwirkende Sende- und Empfangseinheit (2) umfasst und mit einem vom stationären Modul (1, 2) räumlich entfernten mobilen Transpondermodul (5), wobei
- die Sende- und Empfangseinheit (2) zur Erzeugung eines elektromagnetischen Hilfsfeldes mit einer ersten Feldstärke ausgelegt ist, welches durch das in das Hilfsfeld eingebrachte Transpondermodul (5) dämpfbar ist,
- die Sende- und Empfangseinheit (2) zur Erzeugung eines elektromagnetischen Hauptfelds mit einer gegenüber der ersten Feldstärke vergrößerten zweiten Feldstärke ausgelegt ist, wenn eine über einem vorgegebenen Dämpfungsschwellwert liegende Dämpfung des Hilfsfeldes festgestellt wird,
- das Transpondermodul (5) zur Bewirkung einer zeitlich variablen Dämpfung des Hauptfeldes ausgelegt ist, wobei der zeitliche Verlauf dieser Dämpfung abhängig von einer im Transpondermodul (5) gespeicherten Codefolge ist, und
- die Kontrolleinheit (1) zur Erzeugung eines Signals ausgelegt ist, dessen zeitlicher Verlauf dem zeitlichen Verlauf der Dämpfung des Hauptfeldes entspricht,
**dadurch gekennzeichnet,**
**dass** der Dämpfungsschwellwert während des Betriebs des Identifikationssystems veränderbar ist.

10. Identifikationssystem nach Anspruch 9 mit Modulen zur Durchführung eines Verfahrens nach einem der Ansprüche 1 bis 8.

11. Identifikationssystem nach einem der Ansprüche 9 oder 10,
**dadurch gekennzeichnet,**
**dass** eine lediglich einen Sender (3) aufweisende Sendeeinheit sowohl zur Erzeugung des Hilfsfeldes als auch zur Erzeugung des Hauptfeldes ausgelegt ist.

12. Identifikationssystem nach einem der Ansprüche 9 bis 11,
**dadurch gekennzeichnet,**
**dass** eine lediglich einen Empfänger (4) aufweisende Empfangseinheit sowohl zur Ermittlung der Dämpfung des Hilfsfeldes als auch zur Ermittlung der Dämpfung des Hauptfeldes ausgelegt ist.
